# EUROPEAN PATENT SPECIFICATION

(11) **EP 0 335 875 B1**
(45) Date of publication and mention of the grant of the patent: **04.08.1993**
(21) Application number: 87907437.5
(22) Date of filing: 19.11.1987
(51) Int. Cl.: C03C 1/00, C03B 19/10

(54) **VITREOUS SILICA**
KIESELGLAS
SILICE VITREUSE

(30) Priority: 20.11.1986 GB 8627735
(43) Date of publication of application: 11.10.1989
(73) Proprietor: TSL GROUP PLC, Tyne and Wear NE28 6DG (GB)
(72) Inventor: HUSSAIN, Tasaduq, Tyne and Wear NE26 3ST (GB); SAYCE, Ian, George, Northumberland NE43 7NX (GB)
(74) Representative: Newby, John Ross
(86) International application number: GB8700818
(87) International publication number: WO8803914

(56) References cited:
- GB-A- 1 538 179
- GB-A- 2 113 200
- Chemical Abstracts, vol. 95, no. 5, September 1985 (Columbus, Ohio, US), see page 250, abstract no. 85014s & JP, A, 80167143 (HITACHI LTD) 26 December 1980

## Description

This invention relates to an improved method of fabricating a vitreous silica article by fusing a vitreous silica powder and to a method of preparing a feedstock material to substitute for quartz crystal powder in a fusion process to manufacture a vitreous silica article.

Articles of vitreous silica, rods, tubes, vessels and other fabricated items, are widely used in modern industry. The majority of these are made by fusion of natural quartz crystal powders. However, with increasing emphasis being laid on product quality, there is a frequent requirement for a purity of vitreous silica which cannot readily be obtained using natural quartz crystal as feedstock, even though such crystal feedstock may have been subjected to a complex refinement process.

The conventional answer to this problem is to use so-called synthetic vitreous silica, which is made on an industrial scale by a vapour deposition process, for example the deposition of a vitreous silica soot formed by vapour phase hydrolysis of silicon tetrachloride to form a porous "preform", which is then subjected to a dehydration process, followed by a high temperature vitrification step, whereby the pores are removed, and a fully densified glass is manufactured. An alternative large scale route to synthetic vitreous silica involves the vapour phase hydrolysis or oxidation of silicon tetrachloride in a flame or plasma, and direct deposition of synthetic silica glass from the flame or plasma onto a substrate, typically silica. In this way substantial ingots of synthetic vitreous silica can be built up in a single stage process.

These methods have several disadvantages. The range of geometrical shapes efficiently produced in the deposition stage is restricted, and the deposition rate is itself limited by the need to ensure that an acceptable proportion of the silica formed in the flame or plasma is deposited on the substrate.

Methods of making synthetic silica articles by alternative routes have been proposed. Many workers have endeavoured to make such articles by casting a gel, prepared by hydrolysis of an organo-silicate ester, and careful dehydration and firing of the cast gel. A serious disadvantage of such routes is the lengthy time required for dehydration of the gel if cracking of the cast gel is to be avoided. It is furthermore not yet possible to make large articles by this method. GB-A-2113200 discloses the use of an organo-silicate to make a gel body, heating the gel body to produce partial sintering, further heating in a chlorine-containing atmosphere and final sintering to produce a glassy body.

Alternatively, ceramic technology has been used to make sintered silica shapes by pressing a silica powder made by hydrolysis of silicon tetrachloride with water into the required shape and sintering and subsequently glazing the shaped article. This route to silica articles appears more economical, but suffers from several deficiencies. Easy handling of the silica powder is critical when such powders are required to be of maximum purity, but the prior art hydrolysis reaction leads to a silica gel product which is difficult to handle, and on dehydration gives a powder of high surface area and low density, impossible to fabricate into high quality synthetic vitreous silica articles using conventional equipment and techniques. The use of synthetic silica powders, manufactured by hydrolysis of silicon chemicals, has thus not yet proved to be a viable route for the production of synthetic vitreous silica articles.

The manufacture of fused quartz or vitreous silica articles from natural crystalline feedstocks is, in contrast, well known. Thus quartz crystal powders, either natural or synthetic, may be fused in a flame, for example an oxy-hydrogen flame and thus a vitreous silica form may be built-up. Fusion may also be effected in an electrically heated gas flow, or plasma, provided by an electric arc, by one or more arc plasma torches, or by an induction plasma torch, operating for example at radio frequency. Alternatively, quartz crystal powders may be fused within an electrically heated container, at atmospheric or reduced pressure, and advantageously in the presence of hydrogen, helium or a mixture thereof.

The present invention seeks to combine the advantages of using an established prior art fusion technique, but replacing the quartz crystal powder with a synthetic vitreous silica powder of high purity and uniform consistency.

Synthetic silica powders may be made in many different forms, with a wide range of chemical purities. In general, however, it is required that each metallic impurity be present in an amount less than 10 ppm by weight, and preferably less than 1 ppm by weight. The preferred feedstocks for the manufacture of such powders are therefore chemicals which may be readily purified, and silicon halides and halosilanes, and organo-silicate esters are thus of particular interest. Silicon tetrachloride, and trichlorosilane are preferred raw materials, being readily available at high purity as by-products in the manufacture of electronic grades of silicon.

These raw materials may be economically converted to fine powder amorphous silica by combustion in an oxy-hydrogen or similar flame, or by heating in a plasma-heated oxygen flow.

These amorphous silica powders, however, are not suitable for use in a conventional fusion process, because they have very high surface area and consist of agglomerates of many ultrafine silica particles. As a result, if subjected to a conventional fusion process, they evolve a large amount of gas, and result in a product contaminated with many small bubbles. By the method of the present invention, a high surface area amorphous intermediate powder may serve as a precursor powder and be converted to a low surface area amorphous powder, which may be used in place of quartz crystal powder in a conventional fusion process.

What constitutes the invention is defined in the following claims 1 and 10 and involves reducing the BET-surface area of an amorphous fume silica powder to not above 5 m²g⁻¹.

The reduction in the BET-surface area is at least 10 times and suitably is at least 50 times and can be more than 500 times.

Desirably the BET-surface area of the powder after surface area reduction is not above 3 m²g⁻¹ and preferably is not above 1 m²g⁻¹.

The particle size may be tailored to suit the specific fusion process envisaged but conveniently at least 90% w/w of the amorphous silica powder subjected to fusing consists of particles of size (i.e. agglomerate size) in excess of 50 micrometres, preferably in excess of 100 micrometres and typically between 125 and 600 micrometres, i.e. such particles are retained on a sieve of mean aperture 125 micrometres, but pass through a sieve of mean aperture 600 micrometres.

Throughout this specification the term "BET-surface area" should be taken to mean the surface area as measured by gas absorption, based on the technique of Brunauer, Emmett, and Teller described in the J. Amer. Chem. Soc. 1938, 60, 309.

Desirably the surface area reduction is effected in an aqueous phase treatment followed by drying and, if necessary, grinding to a suitable grain size, followed by heating to sinter the individual particles in the granular agglomerate. Alternatively in certain circumstances, a dry agglomeration process, such as heating the dry high surface area silica powder, may be used to increase grain size and decrease the surface area of the product.

The present invention thus comprises taking a high purity amorphous fume silica powder of high surface area, derived for example from vapour phase hydrolysis of a silicon halide, by oxidation in the vapour phase, or by condensation of a high temperature silica-containing vapour, and converting such a powder to a more easily handled low surface area vitreous silica grain suitable for fusion in a conventional process.

The process of surface area reduction typically includes heating the intermediate powder in an appropriate furnace, preferably in a gas atmosphere controlled with respect to composition and/or pressure. The composition of the gas may be chosen to enhance the chemical purity of the powder being treated by removal of volatile contaminants and/or to control the nature of the process of surface area reduction or sintering. Thus an atmosphere containing chlorine or chlorinating species may advantageously be used to effect a purification of the powder in the course of heat treatment, by combination with hydroxyl (OH) groups on the surface or within the silica lattice, also by removal of contaminating metal ions by formation of volatile chlorides. Addition of other halogen species may also help in this process. Again an atmosphere of helium, hydrogen, or a mixture thereof may be employed, and under these circumstances, both gases being soluble in vitreous silica, the risk of entrapment of insoluble gas during the sintering process is greatly reduced, and in consequence the tendency to form a bubbly product on fusion is also minimised. A mixture of helium and halogen-containing gas may be used simultaneously to effect controlled sintering, and purification of the powder. It may further be advantageous to operate at reduced pressure where it is required to sinter the powder with minimum take-up of gas.

Conveniently, at least 90% w/w of the substitute feedstock material, i.e. synthetic vitreous silica grain, should consist of particles of a size not less than 50 micrometres, preferably greater than 100 micrometres and ideally between 125-600 micrometres. The substitute feedstock material may arise from one of the above processes with an acceptable particle size distribution, but if not, the size can be adjusted either by comminution, if oversize, or by an agglomeration process if undersize. If a comminution process is used, it is desirably selected so as to minimise contamination in the crushing and seiving operations. Thus grinding media made from high purity silica may be advantageously used.

Several forms of high temperature furnace can be used, including a static bed furnace, a shaft kiln and a rotary kiln. A gas-sealed rotary kiln appears particularly advantageous in that it permits, inter alia, short residence times, uniform treatment temperature and continuous operation. While in some situations it is envisaged that the powder will be converted to a free-flowing grain before delivery to the high temperature process for surface area reduction, in another situation the high surface area precursor, e.g. silica fume, may be fed in a raw state (i.e. as amorphous fume, not free flowing grain) into a rotary kiln when under suitable conditions, a process of dry agglomeration may be effected and the product emerges as roughly spherical sintered agglomerates of size and density which may be controlled by varying, for example, the treatment time, the temperature and the atmosphere.

Other methods of reducing the BET-surface area of the precursor powder may also be employed. One which has proved promising is the process of spray drying and calcination, whereby a gel or suspension of the precursor powder may be atomised, and dehydrated, and even partially or fully calcined in flight.

The invention will now be further described with the following Examples:

### Example 1

Fume silica, particle size 0.01 micrometres and BET-surface area of approximately 175 m²g⁻¹ was mixed with high purity water in proportions of 500 cm³ water to 200 g fume. The suspension gelled on standing and was dried at 100°C. The solid, friable mass thus produced was comminuted and sieved to size faction range 100 - 500 micrometres - using high purity silica grinding media. The low density granular powder produced has a BET-surface area of approximately 160 m²g⁻¹ and could be sintered in a gas purged vessel made from fused quartz, which was heated within an electrically heated muffle furnace. The temperature of the furnace was raised to 800°C over 90 minutes, while oxygen was passed over the gel powder. After 3 hours the temperature was further increased to 1100°C at a heating rate 2°C/min, and held at 1100°C for between 1 -19 hours. Alternatively, the low density granular powder was sintered and substantially dehydrated by being heated to 800°C in a flow of oxygen (180 cm³min⁻¹) over a period of 1.5 hours. The oxygen flow was replaced with helium (180 cm³min⁻¹) mixed with chlorine (180 cm³min⁻¹), and the temperature was raised to 1000°C over a period of 1.5 hours. The flow of chlorine was stopped, the powder was heated for 1 hour at 1100°C under helium (180 cm³min⁻¹). Finally, to remove dissolved gases, the powder was heated in air for 16 hours at 1220°C. Densification as a result of pore collapse was achieved, and the water content of the powder was substantially reduced to give a product powder of BET-surface area < 1 m²g⁻¹.

### Example 2

A granular powder produced substantially as in Example 1, had a BET-surface area of 207 m²g⁻¹ and a grain size in the range 100 to 1000 micrometres. The powder was heated in oxygen flow (180 cc/min) to 800°C at a heating rate of 8.9°C/min. The oxygen flow was replaced by a mixture of He (180 cm³ min⁻¹) and chlorine (180 cm³ min⁻¹) and the temperature was held at 800°C for a period of 1 hour. The supply of chlorine was then stopped and with pure helium as the flowing gas the temperature was raised to 1100°C and held at that temperature for 1 hour. Finally, the supply of helium was stopped and the powder was heated in a flow of air to 1150°C and held at that temperature for 17 hours to yield a granular powder of BET-surface area < 1.0 m²g⁻¹.

### Example 3

A granular, powder produced as in Example 1, was heated in helium flow at a heating rate of 8.9°C/min to a temperature of 900°C. Chlorine gas at a flow rate of 180 cm³ min⁻¹ was added to the helium flow and the temperature was held at 900°C for a period of 2 hours. The mixed He/Cl₂ flow was replaced by a flow of pure oxygen and further heating to 1100°C was carried out in the O₂ flow (at a rate of 180 cm³ min⁻¹). The temperature of 1100°C was held for 1 hour. Final sintering in air was carried out at 1200°C for 1 hour and produced a powder with a BET-surface area < 1.0 m²g⁻¹. The above process yielded a powder having contamination by individual metallic elements of generally less than 1 ppm and contamination by individual alkali metals of less than 0.1 ppm.

### Example 4

55 gm of fume silica of primary particle size 0.01 micrometres, a bulk density of 0.05 to 0.1 g/cm³ and a BET-surface area of 200 m²g⁻¹ was heated in air to 1200°C at a heating rate of 5°C/min in a rotary furnace, and held for 1 hour at 1200°C. Free flowing powder in the form of roughly spherical granules of sizes in the range 0.1 to 5 mm was produced having a BET-surface area <1.0 m²g⁻¹.

### Example 5

The process described in Example 4 was carried out with the air replaced by a dehydrating and purifying atmosphere (of mixed He and Cl₂) at a temperature in the range of 900 to 1200°C. A high purity powder with a BET-surface area of less than 1 m²g⁻¹ was produced with metallic contamination < 1 ppm and low hydroxyl (OH) content.

### Example 6

Fume silica particles of size 0.01 micrometres and BET-surface area of 175 m²g⁻¹ was blended with water in proportions 750 cm³ water to 250 g fume, to yield a moist crumb-like material. This material was fed directly into a rotary furnace at 600°C to yield a granulated powder with grains sized in the range 0.1 to 3 mm. Direct granulation eliminates necessity for crushing and grinding of the dried granular gel, and such powder can be further processed as in Examples 2, 3 and 4, to yield a suitable high purity feedstock.

The product powder from each of Examples 2 to 6 may be used to replace quartz crystal powder in any of a variety of known fusion processes.

## Claims

1. A method of preparing a feedstock material to substitute for quartz crystal powder in a fusion process for the manufacture of a vitreous silica article which method is characterised in that it includes the steps of (a) taking an amorphous fume silica precursor powder created by vapour-phase reaction of a volatile compound of silicon, and (b) subsequently reducing the BET-surface area of the precursor powder by a factor of at least 10 to not more than 5 m²g⁻¹ by (i) mixing the precursor power with water, (ii) drying the wetted powder and (iii) heat treating the dried powder.

2. A method as claimed in claim 1, characterised in that the dried wetted powder after stage (ii) was a solid friable mass and was comminuted and sieved to separate the size fraction in the range 50 to 1000 micrometers before being subjected to sintering in stage (iii) and was sintered in stage (iii) at a temperature in excess of 1000°C.

3. A method as claimed in claim 1 or 2, characterised in that the wetted powder from stage (i) was a moist crumb-like material which was dried and heated in stages (ii) and (iii) at about 600°C.

4. A method as claimed in any one of claims 1 to 3, characterised in that the BET-surface area of the powder after stage (iii) of the surface area reduction of step (b) is not above 3 m²g⁻¹.

5. A method as claimed in any one of claims 1 to 3, characterised in that the BET-surface area of the powder after stage (iii) of the surface area reduction of step (b) is not above 1 m²g⁻¹.

6. A method as claimed in any one of claims 1 to 5, characterised in that at least 90% w/w of the substitute feedstock material produced after stage (iii) has particles of size between 50 micrometers and 600 micrometers.

7. A method as claimed in any one of claims 1 to 6, characterised in that the heat treating in stage (iii) occurs in an atmosphere containing a halogen, a compound of chlorine, hydrogen or helium.

8. A method as claimed in any one preceding claim, characterised in that any metallic impurity content present in the substitute feedstock material is less than 1 pmm by weight.

9. A vitreous silica article produced by a fusion method currently used with quartz crystal powder, characterised in that a feedstock material produced by a method of any preceding claim is used in place of quartz crystal powder.

10. A vitreous silica article made by a fusion process using a feedstock material, characterised in that said feedstock material is made by a method comprising the steps of:
a. taking an amorphous fume silica precursor powder created by vapour-phase hydrolysis of a silicon halide, oxidation of a volatile silicon compound in the vapour phase or condensation of a high temperature silica-containing vapour,
b. subsequently reducing the BET-surface area of the precursor powder by a factor of at least 10 to not more than 5 m²g⁻¹ in the following stages:
(i) mixing the precursor powder with water to form a wetted powder,
(ii) drying the wetted powder to form a dried powder, and
(iii) heat treating the dried powder.

## Patentansprüche

1. Verfahren zur Herstellung eines Einsatzstoffes als Ersatz für Quarzkristallpulver in einem Schmelzverfahren zur Herstellung eines Gegenstands aus Quarzglas, dadurch gekennzeichnet, daß es aus folgenden Schritten besteht: (a) man nimmt ein durch Gasphasenreaktion einer flüchtigen Siliciumverbindung gebildetes amorphes pulverförmiges Vorprodukt aus pyrogener Kieselsäure und (b) verringert anschließend die BET-Oberfläche des pulverförmigen Vorprodukts um mindestens das Zehnfache, so daß sie nicht mehr als 5 m²g⁻¹ beträgt, indem man (i) das pulverförmige Vorprodukt mit Wasser mischt, (ii) das benetzte Pulver trocknet und (iii) das getrocknete Pulver tempert.

2. Verfahren nach Anspruch 1, dadurch gekennzeichnet, daß das getrocknete benetzte Pulver nach der Stufe (ii) eine feste, bröckelige Masse darstellte und zerkleinert wurde, sowie zur Abtrennung der Teilchenfraktion im Bereich von 50 bis 1000 Mikrometer vor dem Sintern in Stufe (iii) gesiebt wurde, und in Stufe (iii) bei einer Temperatur von oberhalb 1000°C gesintert wurde.

3. Verfahren nach Anspruch 1 oder 2, dadurch gekennzeichnet, daß es sich bei dem benetzten Pulver aus Stufe (i) um ein feuchtes, krümeliges Material handelte, das in Stufe (ii) und (iii) bei etwa 600°C getrocknet und erhitzt wurde.

4. Verfahren nach einem der Ansprüche 1 bis 3, dadurch gekennzeichnet, daß die BET-Oberfläche des Pulvers nach Stufe (iii) des Schritts (b) zur Verringerung der Oberfläche nicht mehr als 3 m²g⁻¹ beträgt.

5. Verfahren nach einem der Ansprüche 1 bis 3, dadurch gekennzeichnet, daß die BET-Oberfläche des Pulvers nach Stufe (iii) des Schritts (b) zur Verringerung der Oberfläche nicht mehr als 1 m²g⁻¹ beträgt.

6. Verfahren nach einem der Ansprüche 1 bis 5, dadurch gekennzeichnet, daß mindestens 90 % (w/w) des nach Stufe (iii) erhaltenen Ersatzeinsatzstoffes Teilchen mit einer Größe zwischen 50 Mikrometer und 600 Mikrometer aufweisen.

7. Verfahren nach einem der Ansprüche 1 bis 6, dadurch gekennzeichnet, daß das Tempern in Stufe (iii) in einer Atmosphäre erfolgt, die ein Halogen, eine Chlorverbindung, Wasserstoff oder Helium enthält.

8. Verfahren nach einem der vorhergehenden Ansprüche, dadurch gekennzeichnet, daß ein gegebenenfalls im Ersatzeinsatzstoff vorhandener metallischer Verunreinigungsgehalt weniger als 1 Gew.-ppm beträgt.

9. Gegenstand aus Quarzglas, hergestellt nach einem für Quarzkristallpulver allgemein gebräuchlichen Schmelzverfahren, dadurch gekennzeichnet, daß anstelle von Quarzkristallpulver ein gemäß einem Verfahren nach einem der vorhergehenden Ansprüche hergestellter Einsatzstoff verwendet wird.

10. Gegenstand aus Quarzglas, hergestellt nach einem Schmelzverfahren unter Verwendung eines Einsatzstoffes, dadurch gekennzeichnet, daß jener Einsatzstoff nach einem Verfahren hergestellt wird, das aus folgenden Schritten besteht:
a. man nimmt ein durch Hydrolyse eines Siliciumhalogenids in der Gasphase, Oxidation einer flüchtigen Siliciumverbindung in der Gasphase oder Kondensation siliciumdioxidhaltigen Heißdampfes gebildetes amorphes, pulverförmiges Vorprodukt von pyrogener Kieselsäure,
b. verringert anschließend die BET-Oberfläche des pulverförmigen Vorprodukts um mindestens das Zehnfache, so daß sie nicht mehr als 5 m²g⁻¹ beträgt, durch folgende Schritte:
(i) man mischt das pulverförmige Vorprodukt mit Wasser unter Bildung eines benetzten Pulvers,
(ii) trocknet das benetzte Pulver unter Bildung eines getrockneten Pulvers und
(iii) tempert das getrocknete Pulver.

## Revendications

1. Procédé de préparation d'une matière première pour remplacer une poudre de cristaux de quartz dans un procédé de fusion servant à fabriquer un article de silice vitreuse, ce procédé étant caractérisé en ce qu'il comprend les étapes qui consistent (a) à se munir d'une poudre précurseur de fumée de silice amorphe engendrée par une réaction en phase vapeur d'un composé de silicium volatil, et (b) à réduire ensuite la surface spécifique BET de la poudre précurseur d'un facteur au moins égal à 10 et de pas plus de 5 m²g⁻¹, (i) en mélangeant la poudre précurseur avec de l'eau, (ii) en séchant la poudre mouillée et (iii) en soumettant la poudre séchée à un traitement thermique.

2. Procédé selon la revendication 1, caractérisée en ce que la poudre mouillée et séchée après l'étape (ii) est une masse solide friable et est pulvérisée et tamisée pour séparer la fraction granulométrique de 50-1000 µm avant d'être soumise à un frittage dans l'étape (iii), et est frittée dans l'étape (iii) à une température supérieure à 1000°C.

3. Procédé selon la revendication 1 ou 2, caractérisé en ce que la poudre mouillée de l'étape (i) est une matière humide ressemblant à des miettes qui est séchée et chauffée dans les étapes (ii) et (iii) au voisinage de 600°C.

4. Procédé selon l'une quelconque des revendications 1 à 3, caractérisé en ce que la surface spécifique BET de la poudre après l'étape (iii) de la réduction de surface spécifique de l'étape (b) n'est pas supérieure à 3 m²g⁻¹.

5. Procédé selon l'une quelconque des revendications 1 à 3, caractérisé en ce que la surface spécifique BET de la poudre après l'étape (iii) de la réduction de surface spécifique de l'étape (b) n'est pas supérieure à 1 m²g⁻¹.

6. Procédé selon l'une quelconque des revendications 1 à 5, caractérisé en ce qu'au moins 90% en poids de la matière première de remplacement produite après l'étape (iii) possède une granulométrie comprise entre 50 µm et 600 µm.

7. Procédé selon l'une quelconque des revendications 1 à 6, caractérisé en ce que le traitement thermique de l'étape (iii) a lieu dans une atmosphère contenant un halogène, un composé du chlore, de l'hydrogène ou de l'hélium.

8. Procédé selon l'une quelconque des revendications précédentes, caractérisé en ce que toute teneur en impureté métallique présente dans la matière première de remplacement est inférieure à 1 ppm en poids.

9. Article de silice vitreuse produit par un procédé de fusion actuellement utilisé avec de la poudre de cristaux de quartz, caractérisé en ce que l'on utilise une matière première produite par un procédé selon l'une quelconque des revendications précédentes, à la place de la poudre de cristaux de quartz.

10. Article de silice vitreuse fabriqué par un procédé en fusion à l'aide d'une matière première, caractérisé en ce que ladite matière première est fabriquée par un procédé comprenant les étapes qui consistent à :
a. se munir d'une poudre précurseur de fumée de silice amorphe engendrée par hydrolyse en phase vapeur d'un halogénure de silicium, oxydation en phase vapeur d'un composé de silicium volatil ou condensation d'une vapeur haute température contenant de la silice,
b. réduire ensuite la surface spécifique BET de la poudre précurseur d'un facteur au moins égal à 10 et de pas plus de 5 m²g⁻¹, par les étapes suivantes :
(i) en mélangeant la poudre précurseur avec de l'eau pour former une poudre mouilée,
(ii) en séchant la poudre mouillée pour former une poudre séchée, et
(iii) en soumettant la poudre séchée à un traitement thermique.
